# EUROPEAN PATENT SPECIFICATION

(11) **EP 2 453 285 B1**
(45) Date of publication and mention of the grant of the patent: **03.04.2013**
(21) Application number: 11008897.8
(22) Date of filing: 08.11.2011
(51) Int. Cl.: G02B 21/06, G02B 27/42, G02B 21/00, G21K 1/00, G02B 27/00

(54) **Illumination optical system**
Optisches Beleuchtungssystem
Système optique d'éclairage

(30) Priority: 16.11.2010 JP 2010256138
(43) Date of publication of application: 16.05.2012
(73) Proprietor: OLYMPUS CORPORATION, Shibuya-ku Tokyo 151-0072 (JP)
(72) Inventor: Fukushima, Ikutoshi, Tokyo 151-0072 (JP)
(74) Representative: Schicker, Silvia

(56) References cited:
- DE-A1-102006 049 126
- US-A1- 2004 089 798
- US-A1- 2006 227 440
- MOGENSEN P C ET AL: "Dynamic array generation and pattern formation for optical tweezers", OPTICS COMMUNICATIONS, NORTH-HOLLAND PUBLISHING CO. AMSTERDAM, NL, vol. 175, no. 1-3, 1 February 2000 (2000-02-01), pages 75-81, XP004189565, ISSN: 0030-4018, DOI: 10.1016/S0030-4018(00)00449-1

## Description

### Technical Field

The present invention relates to an illumination optical system.

### Background Art

In fluorescence observation using a microscope, a known illumination optical system in the related art irradiates a plurality of locations on a specimen with light at the same time and observes the reaction of the specimen. (For example, refer to Patent Literature 1).

This illumination optical system uses a hologram to irradiate a plurality of locations with light at the same time. Specifically, a phase pattern for a hologram is created on the basis of an illumination pattern with which spots are formed at a plurality of preset target positions on the specimen, and the wavefront of the light is modulated by a wavefront modulation device to which the phase pattern is applied so that a hologram image is projected onto the specimen.

Patent Literature 2 discloses a system for synthesizing an intensity pattern based on generalized phase contrast imaging. The phase filter contains a plurality of phase shifting regions that is matched to the layout of a light source array, each of the regions being positioned at the zero-order diffraction region of a respective element of the array. Further, the shape of each phase shifting region may match the shape of the zero-order diffraction region of the respective element.

### Citation List

### Patent Literature

{PTL 1} Japanese Patent Application, Publication No. JP 2006-72279
{PTL 2} US Patent Application Publication, Publication No. US 2006/0227440 A1

### Summary of Invention

### Technical Problem

However, the illumination optical system of Patent Literature 1 has a problem in that the region which can be irradiated with light at one time and the size of the spots are limited by the hologram image created on the specimen due to limitations of the pixel pitch of a device constituting the wavefront modulation device that performs wavefront modulation and the optical system.

The present invention has been made in consideration of the circumstances described above, and an object thereof is to provide an illumination optical system in which the region and spot size of light that irradiates a specimen can be changed.

### Solution to Problem

The present invention provides the following solutions to achieve the above object.

A first aspect of the present invention is an illumination optical system comprising a light source; beam-deflecting means for changing the deflecting direction of illuminating light emitted from the light source; a wavefront modulation device having a fixed pixel pitch disposed at a position optically conjugate with the beam-deflecting means and capable of modulating the wavefront of the illuminating light; a Fourier transform optical system that focuses the illuminating light emitted from the wavefront modulation device and performs Fourier transformation thereon; an inverse Fourier transform optical system that performs inverse Fourier transformation on the illuminating light emitted from the Fourier transform optical system to form a substantially collimated light beam; and an objective optical system that focuses the illuminating light emitted from the inverse Fourier transform optical system on an object, wherein the Fourier transform optical system includes a changeable mechanism capable of changing the focal length while maintaining the focal position at the inverse Fourier transform optical system side at a substantially fixed position.

According to the first aspect, since illuminating light from the light source is deflected in any direction by the beam-deflecting means, and the wavefront is modulated by the wavefront modulation device, a wavefront that irradiates the object with the illuminating light in a desired pattern is applied. Thereafter, the illuminating light is focused by the Fourier transform optical system, thus being subjected to Fourier transformation, and is then subjected to inverse Fourier transformation by the inverse Fourier transform optical system, so that it is transformed to a substantially collimated beam and is then focused on the object in a desired pattern by the objective optical system.

In this case, according to the present invention, since the focal length of the Fourier transform optical system is changed by operating the changeable mechanism, the region of the object that can be irradiated with illuminating light at one time and the size of the spots can be changed even if the pixel pitch of a device constituting the wavefront modulation device that performs wavefront modulation is fixed. In this case, since the focal position of the Fourier transform optical system at the inverse Fourier transform optical system side does not change, the illuminating light with the wavefront applied thereto by the wavefront modulation device is introduced to the pupil position of the objective optical system while the optically conjugate positional relationship between the wavefront modulation device and the pupil of the objective optical system is maintained, and thus, the object can be irradiated with the illuminating light in a desired pattern.

In the first aspect, the Fourier transform optical system may include a group of a plurality of lenses having different focal lengths; and the changeable mechanism may select the lenses.
With this configuration, by switching among the plurality of lenses having different focal lengths by selecting the lenses using the changeable mechanism, the region of the object that can be irradiated with illuminating light at one time and the size of the spots can easily be changed even if the pixel pitch of a device constituting the wavefront modulation device that performs wavefront modulation is fixed.

In the first aspect, the Fourier transform optical system may include a liquid lens whose focal length can be changed; and the changeable mechanism may drive the liquid lens so as to change the focal length thereof.
With this configuration, the changeable mechanism drives the liquid lens to change the focal length thereof without changing the focal position at the inverse Fourier transform optical system side, and thus, the region of the object that can be irradiated with illuminating light at one time and the size of the spots can easily be changed.

In the first aspect, the Fourier transform optical system may be constituted by a zooming optical system.
With this configuration, the focal length can be changed by the zooming optical system constituting the Fourier transform optical system without changing the focal position at the inverse Fourier transform optical system side, and thus, the region of the object that can be irradiated with illuminating light at one time and the size of the spots can easily be changed.

A second aspect of the present invention is an illumination optical system comprising a light source; beam-deflecting means for changing the deflecting direction of illuminating light emitted from the light source; a wavefront modulation device having a fixed pixel pitch disposed at a position optically conjugate with the beam-deflecting means and capable of modulating the wavefront of the illuminating light; a Fourier transform optical system that focuses the illuminating light emitted from the wavefront modulation device and performs Fourier transformation thereon; an inverse Fourier transform optical system that performs inverse Fourier transformation on the illuminating light emitted from the Fourier transform optical system to form a substantially collimated light beam; and an objective optical system that focuses the illuminating light emitted from the inverse Fourier transform optical system on an object, wherein the inverse Fourier transform optical system includes a changeable mechanism capable of changing the focal length while maintaining the focal position at the Fourier transform optical system side at a substantially fixed position.

According to the second aspect, since illuminating light from the light source is deflected in any direction by the beam-deflecting means, and the wavefront is modulated by the wavefront modulation device, a wavefront that irradiates the object with the illuminating light in a desired pattern is applied. Thereafter, the illuminating light is focused by the Fourier transform optical system, thus being subjected to Fourier transformation, and is then subjected to inverse Fourier transformation by the inverse Fourier transform optical system, so that it is transformed to a substantially collimated beam and is then focused on the object in a desired pattern by the objective optical system.

In this case, according to the present invention, since the focal length of the inverse Fourier transform optical system is changed by operating the changeable mechanism, the region of the object that can be irradiated with illuminating light at one time and the size of the spots can be changed even if the pixel pitch of a device constituting the wavefront modulation device that performs wavefront modulation is fixed. In this case, since the focal position of the inverse Fourier transform optical system at the Fourier transform optical system side does not change, the illuminating light with the wavefront applied thereto by the wavefront modulation device is introduced to the pupil position of the objective optical system while the optically conjugate positional relationship between the wavefront modulation device and the pupil of the objective optical system is maintained, and thus, the object can be irradiated with the illuminating light in a desired pattern.

A third aspect of the present invention is an illumination optical system comprising a light source; beam-deflecting means for changing the deflecting direction of illuminating light emitted from the light source; a wavefront modulation device having a fixed pixel pitch disposed at a position optically conjugate with the beam-deflecting means and capable of modulating the wavefront of the illuminating light; a Fourier transform optical system that focuses the illuminating light emitted from the wavefront modulation device and performs Fourier transformation thereon; an inverse Fourier transform optical system that performs inverse Fourier transformation on the illuminating light emitted from the Fourier transform optical system to form a substantially collimated light beam; an objective optical system that focuses the illuminating light emitted from the inverse Fourier transform optical system on an object; and a changeable mechanism that changes the focal length of the inverse Fourier transform optical system and that applies a wavefront using the wavefront modulation device so that the focal position of the laser light through the Fourier transform optical system is substantially coincident with the focal position of the inverse Fourier transform optical system at the Fourier transform optical system side.

According to the second or third aspect, since the changeable mechanism is operated as to change the focal length of the inverse Fourier transform optical system, and a phase pattern that makes the focal position of the Fourier transform optical system substantially coincident with the focal position of the inverse Fourier transform optical system at the Fourier transform optical system side is applied using the wavefront modulation device, the size of an image at the focal position of the Fourier transform optical system can be changed, and thus, the size of the region of the object that can be irradiated with the illuminating light at one time can be changed.

Furthermore, the beam diameter of the laser light emitted from the inverse Fourier transform optical system can be changed, and thus, the size of spots irradiating the specimen can be changed.
In this case, the illuminating light with the wavefront applied thereto by the wavefront modulation device is introduced to the pupil position of the objective optical system while the optically conjugate positional relationship between the wavefront modulation device and the pupil of the objective optical system is maintained, and thus, the object can be irradiated with the illuminating light in a desired pattern.

In the second or third aspect, the inverse Fourier transform optical system may include a group of a plurality of lenses having different focal lengths; and the changeable mechanism may select the lenses.
In the second or third aspect, the inverse Fourier transform optical system may include a liquid lens whose focal length can be changed; and the changeable mechanism may drive the liquid lens so as to change the focal length thereof.
In the second or third aspect, the inverse Fourier transform optical system may be constituted by a zooming optical system.

In the second or third aspect, a relay optical system disposed between the beam-deflecting means and the wavefront modulation device may be provided, wherein the Fourier transform optical system may include part of the relay optical system.
With this configuration, the image can by relayed by the relay optical system without increasing the beam diameter, and the configuration can be simplified because the Fourier transform optical system and the relay optical system partially share some components.

In any of the aspects of the present invention, a field stop disposed at the focal position may be provided.
With this configuration, ambient light can be limited by the field stop, thereby preventing the generation of stray light.

### Advantageous Effects of Invention

The present invention offers the advantage that the region and spot size of light irradiating the specimen can be changed.

### Brief Description of Invention

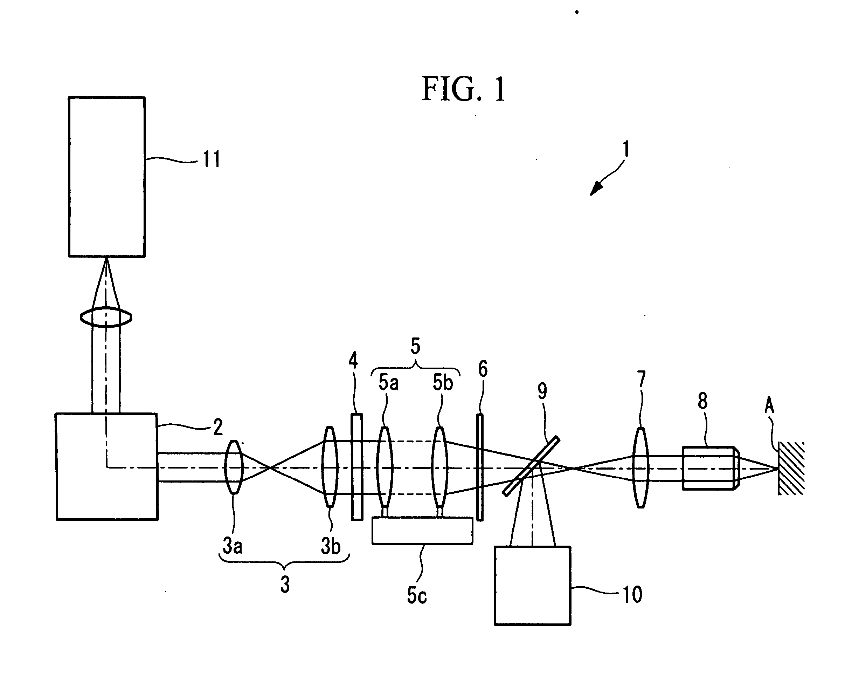

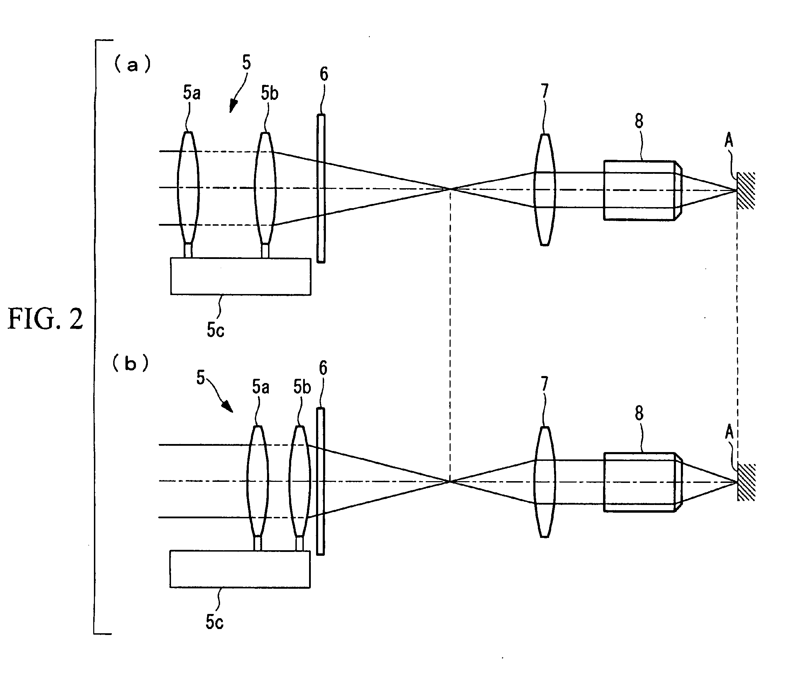

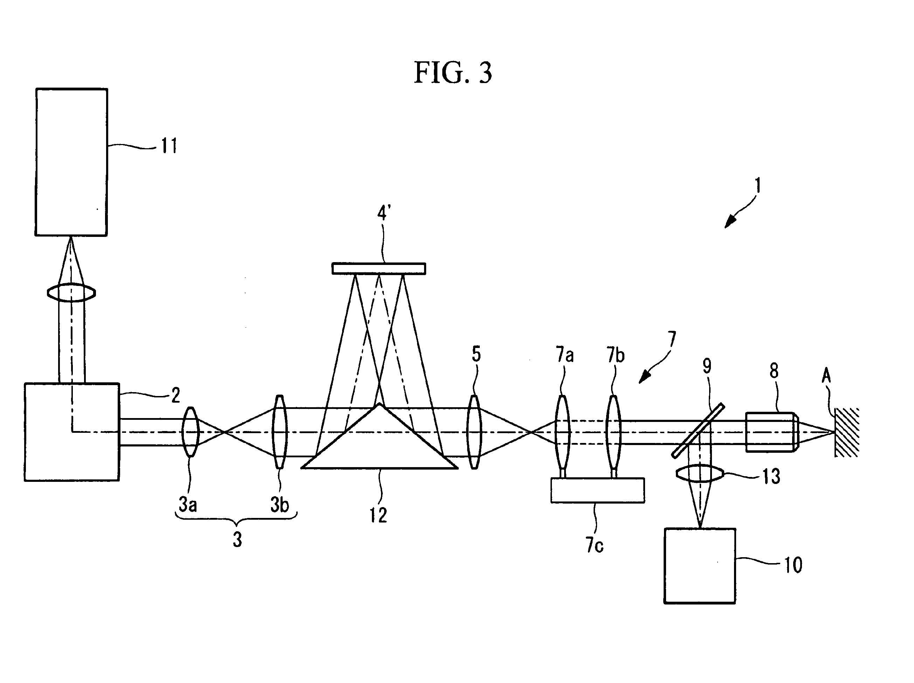

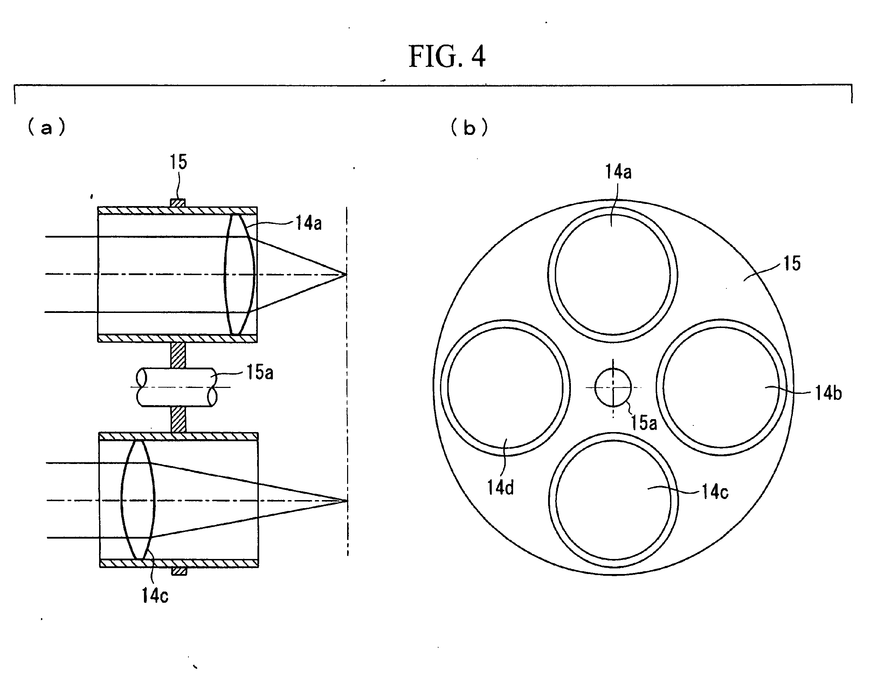

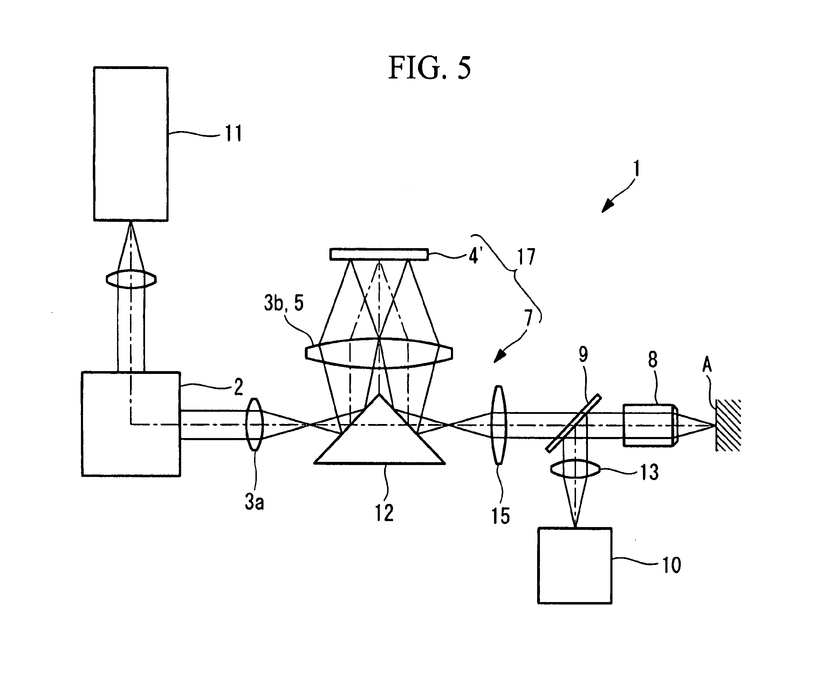

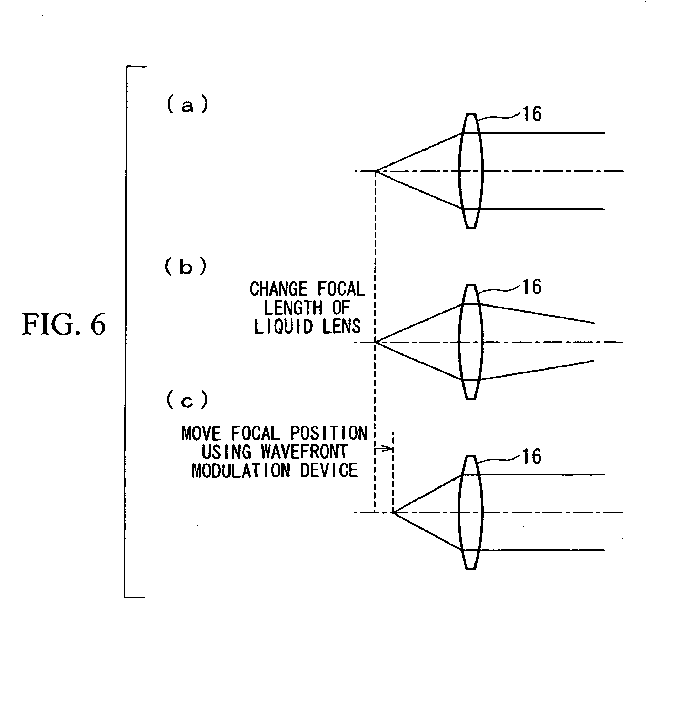

{Fig. 1} Fig. 1 is a diagram showing the overall configuration of an illumination optical system according to an embodiment of the present invention.
{Fig. 2} Fig. 2 shows enlarged diagrams illustrating the operation of the illumination optical system in Fig. 1, in which (a) is a diagram showing the case of a long-focal-length Fourier transform optical system, and (b) is a diagram showing the case of a short-focal-length Fourier transform optical system.
{Fig. 3} Fig. 3 is a diagram showing the overall configuration of a modification of the illumination optical system in Fig. 1, showing an example in which a reflecting wavefront modulation device is used.
{Fig. 4} Fig. 4 shows a modification of the illumination optical system in Fig. 1, in which (a) is a longitudinal sectional view showing a turret that switches between a plurality of switchable lenses, and (b) is a front view thereof.
{Fig. 5} Fig. 5 is a diagram showing the overall configuration of a modification of the illumination optical system in Fig. 1, showing an example in which one lens of a relay optical system and the lens of a Fourier transform optical system are partially shared.
{Fig. 6} Fig. 6 shows diagrams illustrating the operation of a liquid lens employed as an inverse Fourier transform optical system in Fig. 5, in which (a) is a diagram showing a case in which the focal length is long, (b) is a diagram showing a case in which the focal length is decreased without changing the focal position, and (c) is a diagram showing a case in which the focal length is decreased while the focal position is changed.

### Description of Embodiments

An illumination optical system 1 according to an embodiment of the present invention will be described hereinbelow with reference to the drawings.
As shown in Fig. 1, the illumination optical system 1 according to this embodiment is equipped with beam-deflecting means 2, a relay optical system 3, a wavefront modulation device 4, a Fourier transform optical system 5, a field stop 6, an inverse Fourier transform optical system 7, and an objective optical system 8. In Fig. 1, a dichroic mirror 9 and an image acquisition device 10 are provided so that fluorescence returning from a specimen (object) A can be captured.

The beam-deflecting means 2 is equipped with two galvanometer mirrors (not shown) facing each other. The two galvanometer mirrors are provided to as to be pivotable around axes disposed in a mutually staggered positional relationship so as to two-dimensionally change the deflecting direction of laser light formed of a substantially collimated light beam emitted from a laser light source 11.

The relay optical system 3 has two or more focusing lenses 3a and 3b and is configured to receive laser light formed of a collimated light beam, increase the beam diameter, and emit the light as a collimated light beam. Thus, the beam-deflecting means 2 and the wavefront modulation device 4 have an optically conjugate positional relationship.

The wavefront modulation device 4 is formed of, for example, a liquid crystal device, and is configured to perform desired modulation on the wavefront of laser light beams passing therethrough. The modulation to be imparted to the wavefront of the laser light is performed such that, for example, an image of the specimen A is acquired in advance, a plurality of target sites to be irradiated with the laser light are specified in the acquired image to thereby generate an irradiation pattern, and a phase pattern for a hologram created on the basis of the irradiation pattern is generated in the liquid crystal device. Thus, the wavefront of the laser light passing through the wavefront modulation device 4 is modulated according to the phase pattern of the hologram generated in the liquid crystal device.

The Fourier transform optical system 5 is configured to focus the laser light whose wavefront is modulated by the wavefront modulation device 4 and to perform Fourier transformation on the laser light beams at the focal plane thereof.
In this embodiment, the Fourier transform optical system 5 is constituted by a combination of a plurality of lenses 5a and 5b, at least one of which is movable in the direction of the optical axis to configure a changeable mechanism 5c that continuously changes the focal length.

Furthermore, when changing the focal length by moving the lenses 5a and 5b by the operation of the changeable mechanism 5c, the Fourier transform optical system 5 is configured to change the focal length without changing the focal position (front focal position) at the inverse Fourier transform optical system 7 side, as shown in Fig. 2. In other words, the Fourier transform optical system 5 is configured as a zooming optical system using the changeable mechanism 5c.

The field stop 6 blocks the ambient light from the laser light beams to prevent the generation of stray light.
The dichroic mirror 9 has a wavelength characteristic that allows laser light to pass therethrough and reflects fluorescence.

The inverse Fourier transform optical system 7 performs inverse Fourier transformation on the laser light focused by the Fourier transform optical system 5 to form a substantially collimated light beam.
The objective optical system 8 irradiates the specimen A with the laser light that is formed into a substantially collimated light beam and, on the other hand, collects fluorescence generated in the specimen A.

Because the front focal position of the Fourier transform optical system 5 and the focal position of the inverse Fourier transform optical system 7 at the Fourier transform optical system 5 side (back focal position) are always coincident, a relay optical system is configured by these optical systems 5 and 7, and the pupil of the objective optical system 8 is located in an optically conjugate positional relationship with the wavefront modulation device 4.
The image acquisition device 10 acquires an image of fluorescence collected by the objective optical system 8 and reflected by the dichroic mirror 9.

The operation of the thus-configured illumination optical system 1 according to this embodiment will be described hereinbelow.
To irradiate the specimen A with laser light using the illumination optical system 1 according to this embodiment, the light-beam deflecting direction of the beam-deflecting means 2 is adjusted on the basis of a preset irradiation pattern to make the wavefront modulation device 4 generate a desired phase pattern, and the focal length of the Fourier transform optical system 5 is changed by the operation of the changeable mechanism 5c of the Fourier transform optical system 5.

By adjusting the light-beam deflecting direction using the beam-deflecting means 2, the irradiation position of the laser light on the specimen A can be adjusted.
By making the wavefront modulation device 4 generate a phase pattern, the focal plane of the objective optical system 8 can be irradiated with laser light in a set irradiation pattern.

In this embodiment, as shown in Figs. 2(a) and 2(b), since the focal length of the Fourier transform optical system 5 is changed by operating the changeable mechanism 5c of the Fourier transform optical system 5, the size of an image formed at the front focal position of the Fourier transform optical system 5 can be changed. Furthermore, since the front focal position of the Fourier transform optical system 5 and the back focal position of the inverse Fourier transform optical system 7 are maintained in a coincident state by the changeable mechanism 5c, the beam diameter of the laser light emitted from the inverse Fourier transform optical system 7 can be changed.

In other words, the illumination optical system 1 according to this embodiment has the advantages that the size of an image at the focal plane of the objective optical system 8 is changed so that the laser light irradiation region that can be irradiated at one time can be changed, and the beam diameter of laser light incident on the objective optical system 8 is changed so that the minimum spot size of light focused on the specimen A can be changed.

This embodiment is configured to modulate the wavefront with the wavefront modulation device 4 after the light-beam deflecting direction is set by the beam-deflecting means 2; instead, the beam-deflecting means 2 and the wavefront modulation device 4 may be exchanged.

Furthermore, the liquid-crystal wavefront modulation device 4 that allows laser light to pass therethrough has been described by way of example; instead, a reflecting wavefront modulation device 4' may be employed, as shown in Fig. 3. In this case, it is preferable to have a reflecting mirror 12, as shown in Fig. 3, to bring the incidence angle of laser light at the wavefront modulation device 4' close to the direction of the normal to the wavefront modulation device 4'. Reference sign 13 in the drawing denotes an image-forming lens.

In this embodiment, the changeable mechanism 5c in which at least one of the lenses 5a and 5b constituting the Fourier transform optical system 5 is moved in the direction of the optical axis has been shown by way of example; instead, as shown in Fig. 4, a plurality of switchable lenses 14a to 14d having different focal lengths and capable of focusing laser light at one front focal position may be mounted in a turret 15, and the switchable lenses 14a to 14d may be selected by rotating the turret 15 around a rotating shaft 15a.
Furthermore, a liquid lens (see Fig. 6) 16 may be employed to change the focal length, and the liquid lens 16 may be moved in the direction of the optical axis so that the front focal position is maintained at a fixed position.

Furthermore, in this embodiment, the changeable mechanism 5c that changes the focal length while maintaining the front focal position of the Fourier transform optical system 5 has been shown by way of example; instead, as shown in Fig. 3, a changeable mechanism 7c that changes the focal position by moving one or more lenses 7a and 7b of the inverse Fourier transform optical system 7 in the direction of the optical axis while maintaining the back focal position may be employed.
In this case, either switchable lenses or a liquid lens may be employed instead of the zooming optical system.

In the case where the focal length of the inverse Fourier transform optical system 7 is to be changed, it is preferable that the dichroic mirror 9 be disposed between the inverse Fourier transform optical system 7 and the objective optical system 8, and that the image-forming lens 13 be provided between the dichroic mirror 9 and the image acquisition device 10, as shown in Fig. 3. This has the advantage that, even if the focal length of the inverse Fourier transform optical system 7 is changed, image-acquisition can be performed without changing the magnification thereof.

Furthermore, in the case where the focal length is to be changed while maintaining the back focal position of the inverse Fourier transform optical system 7, the lens 3b, which is a part of the relay optical system 3, and the lens constituting the Fourier transform optical system 5 may be the same lens, as shown in Fig. 5. This can reduce the number of lenses, thus allowing the configuration to be simplified. In the example shown in Fig. 5, the liquid lens 16 whose focal length can be changed is used as the inverse Fourier transform optical system 7.

Furthermore, in the example shown in Fig. 5, since the focal length of the inverse Fourier transform optical system 7 can be changed, changing the focal length, as shown in Fig. 6, moves the focal position of the inverse Fourier transform optical system 7. Thus, an additional wavefront that moves the focal position of the Fourier transform optical system 5 by the corresponding amount of movement is applied to the laser light beams by the wavefront modulation device 4'. Thus, the configuration in which the inverse Fourier transform optical system 7 and the wavefront modulation device 4' constitute a changeable mechanism 17 offers the advantage of reducing the number of movable parts, simplifying the system.

### Reference Signs List

- 1: illumination optical system
- 2: beam-deflecting means
- 4, 4': wavefront modulation device
- 5: Fourier transform optical system
- 5c, 7c: changeable mechanism
- 6: field stop
- 7: inverse Fourier transform optical system
- 8: objective optical system
- 11: laser light source (light source)
- 14a to 14d: switchable lenses (lens group)
- 15: turret (changeable mechanism)
- 16: liquid lens
- 17: changeable mechanism

## Claims

1. An illumination optical system (1) comprising:
a light source (11);
beam-deflecting means (2) for changing the deflecting direction of illuminating light emitted from the light source (11);
a wavefront modulation device (4) having a fixed pixel pitch disposed at a position optically conjugate with the beam-deflecting means (2) and capable of modulating the wavefront of the illuminating light;
a Fourier transform optical system (5) that focuses the illuminating light emitted from the wavefront modulation device (4) and performs Fourier transformation thereon;
an inverse Fourier transform optical system (7) that performs inverse Fourier transformation on the illuminating light emitted from the Fourier transform optical system (5) to form a substantially collimated light beam; and
an objective optical system (8) that focuses the illuminating light emitted from the inverse Fourier transform optical system (7) on an object (A),
wherein the Fourier transform optical system (5) includes a changeable mechanism (5c) capable of changing the focal length while maintaining the focal position at the inverse Fourier transform optical system (7) side at a substantially fixed position.

2. The illumination optical system (1) according to Claim 1, wherein
the Fourier transform optical system (5) includes a group of a plurality of lenses (5a,5b) having different focal lengths; and
the changeable mechanism (5c) selects the lenses (5a,5b).

3. The illumination optical system (1) according to Claim 1, wherein
the Fourier transform optical system (5) includes a liquid lens (16) whose focal length can be changed; and
the changeable mechanism (5c) drives the liquid lens (16) so as to change the focal length thereof.

4. The illumination optical system (1) according to Claim 1, wherein the Fourier transform optical system (5) is constituted by a zooming optical system.

5. An illumination optical system (1) comprising:
a light source (11);
beam-deflecting means (2) for changing the deflecting direction of illuminating light emitted from the light source (11);
a wavefront modulation device (4) having a fixed pixel pitch disposed at a position optically conjugate with the beam-deflecting means (2) and capable of modulating the wavefront of the illuminating light;
a Fourier transform optical system (5) that focuses the illuminating light emitted from the wavefront modulation device (4) and performs Fourier transformation thereon;
an inverse Fourier transform optical system (7) that performs inverse Fourier transformation on the illuminating light emitted from the Fourier transform optical system (5) to form a substantially collimated light beam; and
an objective optical system (8) that focuses the illuminating light emitted from the inverse Fourier transform optical system (7) on an object (A),
wherein the inverse Fourier transform optical system (7) includes a changeable mechanism (7c) capable of changing the focal length while maintaining the focal position at the Fourier transform optical system (5) side at a substantially fixed position.

6. An illumination optical system (1) comprising:
a light source (11);
beam-deflecting means (2) for changing the deflecting direction of illuminating light emitted from the light source (11);
a wavefront modulation device (4) having a fixed pixel pitch disposed at a position optically conjugate with the beam-deflecting means (2) and capable of modulating the wavefront of the illuminating light;
a Fourier transform optical system (5) that focuses the illuminating light emitted from the wavefront modulation device (4) and performs Fourier transformation thereon;
an inverse Fourier transform optical system (7) that performs inverse Fourier transformation on the illuminating light emitted from the Fourier transform optical system (5) to form a substantially collimated light beam;
an objective optical system (8) that focuses the illuminating light emitted from the inverse Fourier transform optical system (7) on an object (A); and
a changeable mechanism (7c) that changes the focal length of the inverse Fourier transform optical system (7) and that applies a wavefront using the wavefront modulation device (4) so that the focal position of the laser light through the Fourier transform optical system (5) is substantially coincident with the focal position of the inverse Fourier transform optical system (7) at the Fourier transform optical system (5) side.

7. The illumination optical system (1) according to Claim 5 or 6, wherein
the inverse Fourier transform optical system (7) includes a group of a plurality of lenses (7a,7b) having different focal lengths; and
the changeable mechanism (7c) selects the lenses (7a,7b).

8. The illumination optical system (1) according to Claim 5 or 6, wherein
the inverse Fourier transform optical system (7) includes a liquid lens (16) whose focal length can be changed; and
the changeable mechanism (7c) drives the liquid lens (16) so as to change the focal length thereof.

9. The illumination optical system (1) according to Claim 5 or 6, wherein the inverse Fourier transform optical system (7) is constituted by a zooming optical system.

10. The illumination optical system (1) according to Claim 5 or 6, further comprising
a relay optical system (3) disposed between the beam-deflecting means (2) and the wavefront modulation device (4),
wherein the Fourier transform optical system (5) includes part of the relay optical system (3).

11. The illumination optical system (1) according to any of Claims 1 to 10, further comprising a field stop (6) disposed at the focal position.

## Patentansprüche

1. Optisches Beleuchtungssystem (1) mit:
einer Lichtquelle (11);
einer Strahlablenkungseinrichtung (2) zum Ändern der Ablenkungsrichtung von Beleuchtungslicht, das von der Lichtquelle (11) emittiert wird;
einer Wellenfrontmodulationsvorrichtung (4) mit einem festen Pixelpitch, die an einer optisch mit der Strahlablenkungseinrichtung (2) konjugierten Position angeordnet und dazu ausgebildet ist, die Wellenfront des Beleuchtungslichts zu modulieren;
einem optischen Fourier-Transformations-System (5), welches das von der Wellenfrontmodulationsvorrichtung (4) emittierte Beleuchtungslicht fokussiert und an ihm eine Fourier-Transformation durchführt;
ein optisches Inverse-Fourier-Transformations-System (7), das eine inverse Fourier-Transformation an dem von dem optischen Fourier-Transformations-System (5) emittierten Beleuchtungslicht durchführt, um einen im Wesentlichen kollimierten Lichtstrahl zu erzeugen; und
ein optisches Objektivsystem (8), welches das von dem optischen Inverse-Fourier-Transformations-System (7) emittierte Beleuchtungslicht auf ein Objekt (A) fokussiert,
wobei das optische Fourier-Transformations-System (5) einen veränderbaren Mechanismus (5c) umfasst, der dazu ausgebildet ist, die Brennweite zu ändern, während die Fokusposition auf der Seite des optischen Inverse-Fourier-Transformations-Systems (7) an einer im Wesentlichen festen Position gehalten wird.

2. Optisches Beleuchtungssystem (1) nach Anspruch 1, wobei
das optische Fourier-Transformations-System (5) eine Gruppe von mehreren Linsen (5a, 5b) mit unterschiedlichen Brennweiten umfasst; und
der veränderbare Mechanismus (5c) die Linsen (5a, 5b) auswählt.

3. Optisches Beleuchtungssystem (1) nach Anspruch 1, wobei
das optische Fourier-Transformations-System (5) eine Flüssiglinse (16) umfasst, deren Brennweite verändert werden kann; und
der veränderbare Mechanismus (5c) die Flüssiglinse (16) ansteuert, um ihre Brennweite zu ändern.

4. Optisches Beleuchtungssystem (1) nach Anspruch 1, wobei das optische Fourier-Transformations-System (5) von einem optischen Zoom-System gebildet wird.

5. Optisches Beleuchtungssystem (1) mit:
einer Lichtquelle (11);
einer Strahlablenkungseinrichtung (2) zum Ändern der Ablenkungsrichtung von Beleuchtungslicht, das von der Lichtquelle (11) emittiert wird;
einer Wellenfrontmodulationsvorrichtung (4) mit einem festen Pixelpitch, die an einer optisch mit der Strahlablenkungseinrichtung (2) konjugierten Position angeordnet und dazu ausgebildet ist, die Wellenfront des Beleuchtungslichts zu modulieren;
einem optischen Fourier-Transformations-System (5), welches das von der Wellenfrontmodulationsvorrichtung (4) emittierte Beleuchtungslicht fokussiert und an ihm eine Fourier-Transformation durchführt;
ein optisches Inverse-Fourier-Transformations-System (7), das eine inverse Fourier-Transformation an dem von dem optischen Fourier-Transformations-System (5) emittierten Beleuchtungslicht durchführt, um einen im Wesentlichen kollimierten Lichtstrahl zu erzeugen; und
ein optisches Objektivsystem (8), welches das von dem optischen Inverse-Fourier-Transformations-System (7) emittierte Beleuchtungslicht auf ein Objekt (A) fokussiert,
wobei das optische Inverse-Fourier-Transformations-System (7) einen veränderbaren Mechanismus (7c) umfasst, der dazu ausgebildet ist, die Brennweite zu ändern, während die Fokusposition auf der Seite des optischen Fourier-Transformations-Systems (5) an einer im Wesentlichen festen Position gehalten wird.

6. Optisches Beleuchtungssystem (1) mit:
einer Lichtquelle (11);
einer Strahlablenkungseinrichtung (2) zum Ändern der Ablenkungsrichtung von Beleuchtungslicht, das von der Lichtquelle (11) emittiert wird;
einer Wellenfrontmodulationsvorrichtung (4) mit einem festen Pixelpitch, die an einer optisch mit der Strahlablenkungseinrichtung (2) konjugierten Position angeordnet und dazu ausgebildet ist, die Wellenfront des Beleuchtungslichts zu modulieren;
einem optischen Fourier-Transformations-System (5), welches das von der Wellenfrontmodulationsvorrichtung (4) emittierte Beleuchtungslicht fokussiert und an ihm eine Fourier-Transformation durchführt;
ein optisches Inverse-Fourier-Transformations-System (7), das eine inverse Fourier-Transformation an dem von dem optischen Fourier-Transformations-System (5) emittierten Beleuchtungslicht durchführt, um einen im Wesentlichen kollimierten Lichtstrahl zu erzeugen; und
ein optisches Objektivsystem (8), welches das von dem optischen Inverse-Fourier-Transformations-System (7) emittierte Beleuchtungslicht auf ein Objekt (A) fokussiert; und
einen veränderbaren Mechanismus (7c), der die Brennweite des Inverse-Fourier-Transformations-Systems (7) ändert und eine Wellenfront unter Verwendung der Wellenfrontmodulationsvorrichtung (4) so anwendet, dass die Fokusposition des Laserlichts durch das optische Fourier-Transformations-System (5) im Wesentlichen mit der Fokusposition des optischen Inverse-Fourier-Transformations-Systems (7) auf der Seite des optischen Fourier-Transformations-Systems (5) zusammenfällt.

7. Optisches Beleuchtungssystem (1) nach Anspruch 5 oder 6, wobei
das Inverse-Fourier-Transformations-System (7) eine Gruppe von mehreren Linsen (7a, 7b) mit unterschiedlichen Brennweiten umfasst; und
der veränderbare Mechanismus (7c) die Linsen (7a, 7b) auswählt.

8. Optisches Beleuchtungssystem (1) nach Anspruch 5 oder 6, wobei
das optische Inverse-Fourier-Transformations-System (7) eine Flüssiglinse (16) umfasst, deren Brennweite verändert werden kann; und
der veränderbare Mechanismus (7c) die Flüssiglinse (16) ansteuert, um ihre Brennweite zu ändern.

9. Optisches Beleuchtungssystem (1) nach Anspruch 5 oder 6, wobei das optische Inverse-Fourier-Transformations-System (7) von einem optischen Zoom-System gebildet wird.

10. Optisches Beleuchtungssystem (1) nach Anspruch 5 oder 6, ferner mit
einem optischen Relaissystem (3), das zwischen der Strahlablenkungseinrichtung (2) und der Wellenfrontmodulationsvorrichtung (4) angeordnet ist,
wobei das optische Fourier-Transformations-System (5) einen Teil des optischen Relaissystems (3) umfasst.

11. Optisches Beleuchtungssystem (1) nach irgendeinem der Ansprüche 1 bis 10, ferner mit einer Sehfeldblende (6), die an der Fokusposition angeordnet ist.

## Revendications

1. Système optique d'éclairage (1) comprenant :
une source de lumière (11) ;
un moyen de défection de faisceau (2) destiné à changer le sens de déviation de la lumière d'éclairage émise depuis la source de lumière (11) ;
un dispositif de modulation de front d'onde (4) présentant un pas de pixel fixé disposé au niveau d'une position optiquement conjuguée avec le moyen de défection de faisceau (2) et capable de moduler le front d'onde de la lumière d'éclairage ;
un système optique de transformation de Fourier (5) qui focalise la lumière d'éclairage émise depuis le dispositif de modulation de front d'onde (4) et réalise sur celle-ci une transformation de Fourier ;
un système optique de transformation de Fourier inverse (7) qui réalise une transformation de Fourier inverse sur la lumière d'éclairage émise depuis le système optique de transformation de Fourier (5) pour former un faisceau lumineux sensiblement collimaté ; et
un système optique d'objectif (8) qui focalise la lumière d'éclairage émise depuis le système optique de transformation de Fourier inverse (7) sur un objet (A),
dans lequel le système optique de transformation de Fourier (5) comprend un mécanisme de changement (5c) capable de changer la longueur focale tout en maintenant la position focale du côté du système optique de transformation de Fourier inverse (7) à une position sensiblement fixe.

2. Système optique d'éclairage (1) selon la revendication 1, dans lequel
le système optique de transformation de Fourier (5) comprend un groupe d'une pluralité de lentilles (5a, 5b) présentant différentes longueurs focales ; et
le mécanisme de changement (5c) sélectionne les lentilles (5a, 5b).

3. Système optique d'éclairage (1) selon la revendication 1, dans lequel
le système optique de transformation de Fourier (5) comprend une lentille liquide (16) dont la longueur focale peut être changée ; et
le mécanisme de changement (5c) attaque la lentille liquide (16) de façon à changer sa longueur focale.

4. Système optique d'éclairage (1) selon la revendication 1, dans lequel le système optique de transformation de Fourier (5) est constitué par un système optique de variation de focale.

5. Système optique d'éclairage (1) comprenant :
une source de lumière (11) ;
un moyen de déflexion de faisceau (2) destiné à changer le sens de déviation de la lumière d'éclairage émise à partir de la source de lumière (11) ;
un dispositif de modulation de front d'onde (4) présentant un pas de pixel fixé disposé au niveau d'une position optiquement conjuguée avec le moyen de déflexion de faisceau (2) et capable de moduler le front d'onde de la lumière d'éclairage ;
un système optique de transformation de Fourier (5) qui focalise la lumière d'éclairage émise depuis le dispositif de modulation de front d'onde (4) et réalise une transformation de Fourier sur celle-ci ;
un système optique de transformation de Fourier inverse (7) qui réalise une transformation de Fourier inverse sur la lumière d'éclairage émise depuis le système de transformation de Fourier (5) pour former un faisceau lumineux sensiblement collimaté ; et
un système optique d'objectif (8) qui focalise la lumière d'éclairage émise depuis le système optique de transformation de Fourier inverse (7) sur un objet (A),
dans lequel le système optique de transformation de Fourier inverse (7) comprend un mécanisme de changement (7c) capable de changer la longueur focale tout en maintenant la position focale du côté du système optique de transformation de Fourier (5) à une position sensiblement fixe.

6. Système optique d'éclairage (1) comprenant :
une source de lumière (11) ;
un moyen de déflexion de faisceau (2) destiné à changer le sens de déviation de la lumière d'éclairage émise à partir de la source de lumière (11) ;
un dispositif de modulation de front d'onde (4) présentant un pas de pixel fixé disposé au niveau d'une position optiquement conjuguée avec le moyen de déflexion de faisceau (2) et capable de moduler le front d'onde de la lumière d'éclairage ;
un système optique de transformation de Fourier (5) qui focalise la lumière d'éclairage émise depuis le dispositif de modulation de front d'onde (4) et réalise une transformation de Fourier sur celle-ci ;
un système optique de transformation de Fourier inverse (7) qui réalise une transformation de Fourier inverse sur la lumière d'éclairage émise depuis le système de transformation de Fourier (5) pour former un faisceau lumineux sensiblement collimaté ;
un système optique d'objectif (8) qui focalise la lumière d'éclairage émise depuis le système optique de transformation de Fourier inverse (7) sur un objet (A) ; et
un mécanisme de changement (7c) qui change la longueur focale du système optique de transformation de Fourier inverse (7) et qui applique un front d'onde en utilisant le dispositif de modulation de front d'onde (4) de sorte que la position focale de la lumière laser à travers le système optique de transformation de Fourier (5) coïncide substantiellement avec la position focale du système optique de transformation de Fourier inverse (7) du côté du système optique de transformation de Fourier (5).

7. Système optique d'éclairage (1) selon la revendication 5 ou 6, dans lequel
le système optique de transformation de Fourier inverse (7) comprend un groupe d'une pluralité de lentilles (7a, 7b) présentant différentes longueurs focales ; et
le mécanisme de changement (7c) sélectionne les lentilles (7a, 7b).

8. Système optique d'éclairage (1) selon la revendication 5 ou 6, dans lequel
le système optique de transformation de Fourier inverse (7) comprend une lentille liquide (16) dont la longueur focale peut être changée ; et
le mécanisme de changement (7c) attaque la lentille liquide (16) de façon à changer sa longueur focale.

9. Système optique d'éclairage (1) selon la revendication 5 ou 6, dans lequel le système optique de transformation de Fourier inverse (7) est constitué par un système optique de variation de focale.

10. Système optique d'éclairage (1) selon la revendication 5 ou 6, comprenant en outre
un système optique relais (3) disposé entre le moyen de déflexion de faisceau (2) et le dispositif de modulation de front d'onde (4),
dans lequel le système optique de transformation de Fourier (5) comprend une partie du système optique relais (3).

11. Système optique d'éclairage (1) selon l'une quelconque des revendications 1 à 10, comprenant en outre un diaphragme de champ (6) disposé à la position focale.
